# EUROPÄISCHE PATENTSCHRIFT

(11) **EP 1 316 131 B1**
(45) Veröffentlichungstag und Bekanntmachung des Hinweises auf die Patenterteilung: **02.03.2011**
(21) Anmeldenummer: 01964922.7
(22) Anmeldetag: 21.08.2001
(51) Int. Cl.: H02B 11/133

(54) **ABSCHLIESSVORRICHTUNG FÜR EINSCHUB-LEISTUNGSSCHALTER**
LOCKING DEVICE FOR WITHDRAWABLE CIRCUIT-BREAKERS
DISPOSITIF DE FERMETURE D'UN DISJONCTEUR ENFICHABLE

(30) Priorität: 04.09.2000 DE 10044530; 24.01.2001 DE 10104325
(43) Veröffentlichungstag der Anmeldung: 04.06.2003
(73) Patentinhaber: SIEMENS AKTIENGESELLSCHAFT, 80333 München (DE)
(72) Erfinder: LIEBETRUTH, Marc, 16548 Glienicke (DE)
(86) Internationale Anmeldenummer: PCT/DE2001/003176
(87) Internationale Veröffentlichungsnummer: WO 2002/021652

(56) Entgegenhaltungen:
- DE-C- 19 641 513
- US-A- 6 031 192

## Beschreibung

Die Erfindung betrifft eine Abschließvorrichtung für einen in einen Einschubrahmen einfahrbaren Niederspannungs-Leistungsschalter mit einem in eine Endlage verschiebbaren internen Verriegelungsschieber, der ein Schloss und eine Einstecköffnung für eine Fahrkurbel mit einer internen Einschaltbereitschaftssteuerung derart verbindet, dass ein Einschalten des Niederspannungs-Leistungsschalters bei in seiner Endlage befindlichem Verriegelungsschieber verhindert ist.

Es ist eine große Anzahl von Einrichtungen zum Schutz gegen eine Fehlbedienung von Leistungsschaltern bekannt. Herkömmliche Niederspannungs-Leistungsschalter weisen im allgemeinen einen internen Verriegelungsschieber auf, der hinter dem Bedienpult des Leistungsschalters innen geführt ist und Schlösser, Einstecköffnungen für Fahrkurbeln, Drucktaster, Stellungsmelder und dergleichen mit einer internen Einschaltbereitschaftssteuerung verbindet, die erst dann eine Einschaltung freigibt, wenn alle erforderlichen Bedingungen erfüllt sind. So zeigt die WO 99/56124 A1 ein Schaltgerät mit einer Abschließeinrichtung sowie einer Fahreinrichtung zum Ein- und Ausfahren relativ zu einem Einschubrahmen, bei welchem die genannten Einrichtungen nur im ausgeschalteten Zustand des Schaltgerätes betätigt werden können. Hinter einem Bedienungspult des Schaltgerätes ist mittels Langlöchern ein Verriegelungsschieber (Sperrstange) geführt, der ein mit einem Mitnehmer eines AUS-Betätigers zusammenwirkendes Kurvenelement aufweist. Der Mitnehmer und das Kurvenelement wirken derart zusammen, dass bei einer Betätigung des Verriegelungsschiebers der AUS-Betätiger nach innen gezogen und hiermit dem Benutzer die Sperrung des Schaltgerätes im Ausschaltzustand signalisiert wird.

Eine weitere Möglichkeit zum Schutz gegen eine Fehlbedienung beschreibt die DE 198 43 207 A1, die ein Bedienungspult für einen Leistungsschalter zeigt, das eine Bedienungsoberfläche mit einer nachrüstbaren Vorrichtung zum Verschließen, Verdecken und Gestalten von Bedienungselementen aufweist. Diese Nachrüstung wird durch eine am Bedienungspult befestigbare Montageplatte zur Aufnahme weiterer Funktionsgruppen erreicht, wobei die Montageplatte Befestigungsvorrichtungen für zwei oder mehr Zusatzelemente aufweist. Ein solches Zusatzelement kann ein Schloss (Schließzylinder) sein.

Alle diese bekannten Einrichtungen sind aber schalterspezifisch und schalterabhängig, weil sie Bestandteil des Schalters sind und beispielsweise bei einer Entnahme des Schalters mit diesem ebenfalls aus der Schaltanlage entnommen werden. Es ist somit beim Einsetzen eines anderen Schalters nicht mehr zu erkennen, welcher Schaltzustand oder welche Verriegelungsbedingungen bei dem entnommenen Schalter vorhanden waren. Das kann bei nicht übereinstimmenden Eigenschaften zu Gefahren für die Anlage und das Bedienpersonal führen.

Verallgemeinert wird herkömmlich also ein Leistungsschalter in der Stellung "AUS" abgeschlossen, indem der Ausschaltknopf gedrückt und abgeschlossen wird. Der Schlüssel wird abgezogen und der Leistungsschalter ist im Zustand AUS verriegelt und kann nicht eingeschaltet werden. Es ist dennoch möglich, den Leistungsschalter in der Schaltstellung "AUS" im Einschub zu verfahren und zu entnehmen.
Die Aufgabe der vorliegenden Erfindung besteht deshalb darin, zu verhindern, dass ein anderer Leistungsschalter in den bereffenden Einschubrahmen eingesetzt und eingeschaltet werden kann. Dabei soll die Hauptschalterbedingung erfüllt werden, d. h. die Stellung der Schaltkontakte muss mit der angezeigten Stellung übereinstimmen.

Diese Aufgabe wird gemäß der vorliegenden Erfindung bei einem in einen Einschubrahmen einfahrbaren Niederspannungs-Leistungsschalter dadurch gelöst, dass die Abschließvorrichtung außerhalb des Leistungsschalters angeordnet ist und ein zusätzliches Schloss sowie ein mit dem internen Verriegelungsschieber zusammenwirkendes Steuerglied aufweist, wobei das Steuerglied beim Abschließen des zusätzlichen Schlosses zum Überführen des internen Verriegelungsschiebers in seine Endlage aus einer einem nicht aktivierten Zustand der Abschließvorrichtung entsprechenden Ruhestellung in eine einem aktivierten Zustand der Abschließvorrichtung entsprechende Stellung überführbar ist. Hierdurch wird zwangsläufig sicher gestellt, dass ein in den Einschubrahmen eingefahrener Leistungsschalter nicht eingeschaltet werden kann, wenn zuvor die Abschließvorrichtung betätigt wurde.

Die Abschließvorrichtung nach der Erfindung kann so ausgebildet sein, dass bei Anordnung des Verriegelungsschiebers mit vertikaler Verschiebbarkeit das Steuerglied in einem den Leistungsschalter aufnehmenden Schaltfeld unterhalb des Leistungsschalters an einem ortsfesten Bauteil angeordnet ist. Das gewünschte Zusammenwirken zwischen dem Steuerglied und dem Verriegelungsschieber kann auf diese Weise mit einfachen Mitteln betriebssicher erreicht werden.

Eine kompakte und zweckmäßige Ausgestaltung kann die Abschließvorrichtung dadurch erhalten, dass diese als eine das zusätzliche Schloss und das Steuerglied umfassende Baueinheit in einem den Leistungsschalter aufnehmenden Schaltfeld unterhalb des Leistungsschalters befestigt ist. Der den Leistungsschalter aufnehmende Einschubrahmen oder eine den Einschubschubrahmen tragende Traverse des Schaltfeldes sind geeignete Bauteile zur Befestigung der genannten Baueinheit.

Jedoch kann die Abschließvorrichtung auch in Funktionsgruppen unterteilt und hierdurch die Möglichkeit geschaffen werden, das zusätzliche Schloss an einer für den Benutzer besonders geeigneten Stelle des Schaltfeldes anzuordnen. Hierzu ist vorgesehen, dass eine das Steuerglied aufweisende Steuereinheit unterhalb des Leistungsschalters im Schaltfeld an einem ortsfesten Bauteil angeordnet ist und dass eine mit der Steuereinheit durch ein flexibles Betätigungsorgan verbundene, das zusätzliche Schloss aufweisende Schließeinheit im Schaltfeld in einem Abstand von der Steuereinheit befestigt ist.

In diesem Zusammenhang ist es erwünscht, die Steuereinheit nach Bedarf im Schaltfeld befestigen zu können. Dies kann dadurch erreicht werden, dass die Steuereinheit eine Grundplatte mit einem daran um einen Lagerbolzen schwenkbaren Steuerglied sowie eine das Steuerglied im nicht aktivierten Zustand der Abschließvorrichtung in eine Ruhestellung vorspannende Rückstellfeder aufweist.

Mit der erfindungsgemäßen anlagenseitigen Abschließvorrichtung wird folgende Funktion erzielt:
Wird in einen leeren Einschubrahmen mit betätigter anlagenseitiger Abschließvorrichtung ein zu dem Einschubrahmen passender beliebiger Niederspannungs-Leistungsschalter eingesetzt, und in Richtung Betriebsstellung verfahren, wird die anlagenseitige Abschließvorrichtung beim Verlassen der Teststellung und vor Erreichen der Betriebsstellung desselben wirksam. Das heißt, das ortsfest angeordnete Steuerglied setzt sich unter eine Betätigungsfläche des internen Verriegelungsschiebers des Leistungsschalters. Der Verriegelungsschieber ist durch die gezogene Kurbel des Einfahrantriebs bereits gehoben. Ist die Betriebsstellung erreicht, kann die Kurbel in den Einfahrantrieb zurückgesteckt werden. Der Steuerschieber verbleibt jedoch in seiner oberen Endlage, das heißt der "AUS"-Taster bleibt gedrückt und ein Einschalten ist nicht möglich, weil der Steuerschieber angehoben ist.

In der Betriebsstellung kann bei gesteckter Fahrkurbel das zusätzliche Schloss betätigt und dadurch der Verriegelungsschieber mit der bekannten Auswirkung angehoben bzw. abgesenkt werden. Damit ist das zusätzliche Schloss bei jeder der möglichen Positionen des Leistungsschalters relativ zum Einschubrahmen (Trenn-, Test-, Betriebsstellung oder nicht vorhanden) zu betätigen, wird aber erst wirksam, wenn ein Leistungsschalter in die Betriebsstellung gebracht wird.

Die Erfindung soll nachfolgend zum besseren Verständnis anhand eines bevorzugten, den Schutzumfang nicht einschränkenden Ausführungsbeispiels näher erläutert werden.

Die Fig. 1 zeigt schematisch einen nicht in den Einschubrahmen eingefahrenen Niederspannungs-Leistungsschalter und eine nicht betätigte anlagenseitige Abschließvorrichtung.

Die Fig. 2 zeigt schematisch einen in den Einschubrahmen eingefahrenen Niederspannungs-Leistungsschalter, der durch die erfindungsgemäße anlagenseitige Abschließvorrichtung gegen eine Einschaltung gesperrt ist.

In der Figur 3 sind Beispiele für anlagenseitige Anordnungen einer Abschließvorrichtung gezeigt.

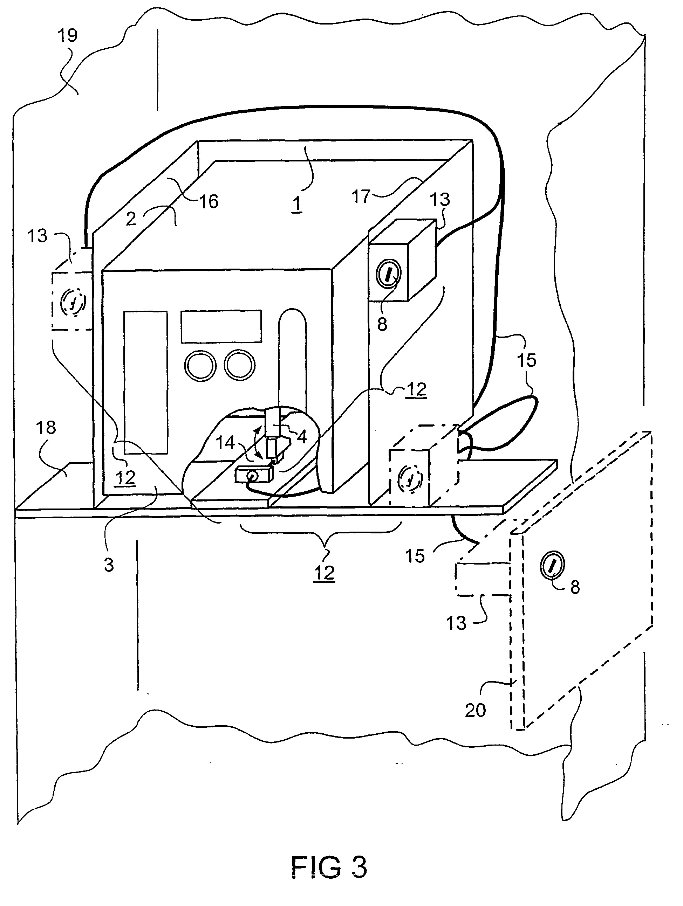

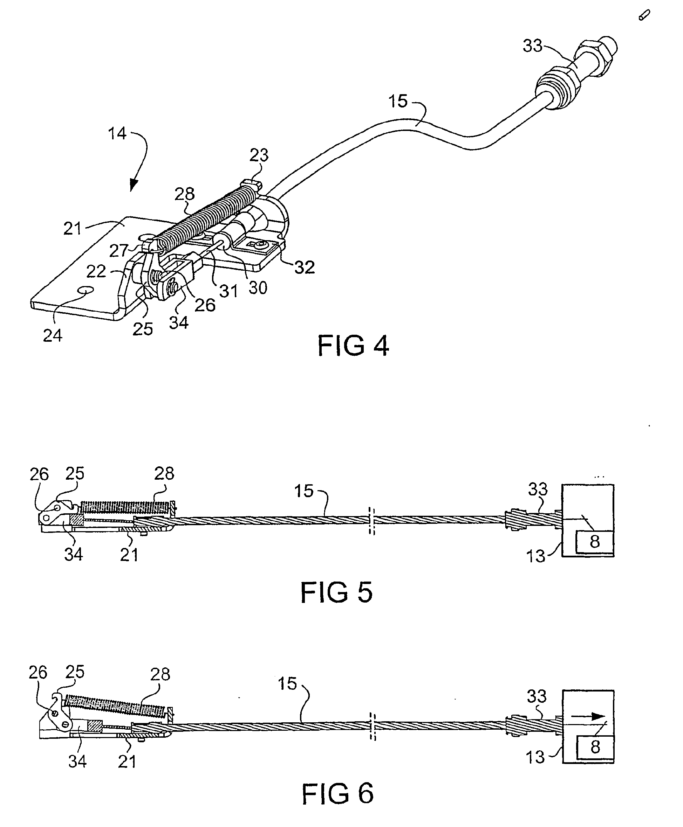

Eine für die Anordnung gemäß der Figur 3 geeignete Steuereinheit ist vergrößert perspektivisch in der Figur 4 sowie in einer geschnittenen Seitenansicht in beiden Stellungen in den Figuren 5 und 6 veranschaulicht.

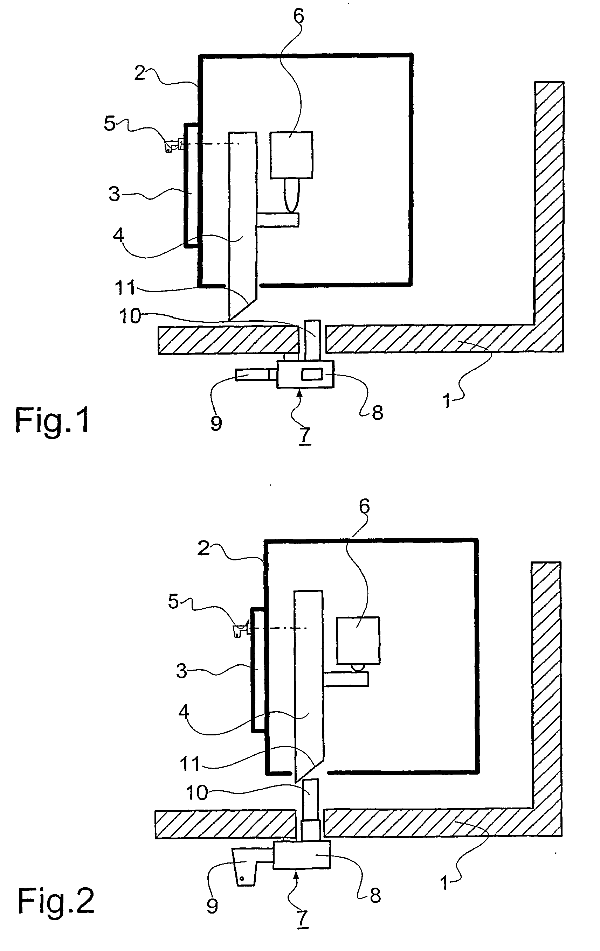

Die Fig. 1 zeigt schematisch einen nicht in den Einschubrahmen 1 eingefahrenen Niederspannungs-Leistungsschalter 2 mit einem Bedienpult 3, einem hinter dem Bedienpult 3 des Leistungsschalters 2 innen verschiebbar geführten Verriegelungsschieber 4 (vgl. Sperrstange 23 in EP 0 685 913 B1), der ein Schloss 5 und eine nicht dargestellte Einstecköffnung für eine Fahrkurbel und dergleichen mit einer internen Einschaltbereitschaftssteuerung 6 verbindet, die erst dann eine Einschaltung freigibt, wenn alle erforderlichen Bedingungen sind erfüllt (vgl. DE 43 33 828 C1) sowie eine nicht betätigte anlagenseitige Abschließvorrichtung 7, die aus einem anlagenseitig unterhalb des Niederspannungs-Leistungsschalters 2, z. B. am Einschubrahmen 1 angebrachten zusätzlichen Schloss 8 mit einem abziehbaren Schlüssel 9 und einem Steuerglied 10 besteht. In diesem nicht betätigten Zustand der anlagenseitigen Abschließvorrichtung 7 kann der Niederspannungs-Leistungsschalter 2 in den Einschubrahmen 1 eingefahren werden, ohne dass die anlagenseitige Abschließvorrichtung 7 wirksam wird, weil der schalterseitige Verriegelungsschieber 4 nicht mit dem Steuerglied 10 in Berührung kommt. Es können also wunschgemäß Schalter entnommen und eingefahren werden, nur in Abhängigkeit von ihren internen Steuer- und Verriegelungsbedingungen.

Die Fig. 2 zeigt schematisch einen in den Einschubrahmen 1 eingefahrenen Niederspannungs-Leistungsschalter 2, der durch die erfindungsgemäße anlagenseitige Abschließvorrichtung 7 gegen eine Einschaltung gesperrt ist. Die anlagenseitige Abschließvorrichtung 7 betätigt durch das zusätzliche Schloss 8 beim Abschließen das Steuerglied 10. Dieses steht über den Einschubrahmen 1 vor und wirkt mit dem internen Verriegelungsschieber 4 des Leistungsschalters 1 folgendermaßen zusammen:
Wird in einen leeren Einschubrahmen 1 mit betätigter anlagenseitiger Abschließvorrichtung 7 ein beliebiger Leistungsschalter 2 eingesetzt, und in Richtung Betriebsstellung verfahren, wird die anlagenseitige Abschließvorrichtung 7 beim Verlassen der Teststellung und vor Erreichen der Betriebsstellung wirksam, das heißt, das im Einschubrahmen 1 befindliche Steuerglied 10 setzt sich unter eine Betätigungsfläche 11 des internen Verriegelungsschiebers 4. Der Verriegelungsschieber 4 ist durch die gezogene Kurbel des Einfahrantriebs bereits gehoben. Ist die Betriebsstellung erreicht, kann die Kurbel in den Einfahrantrieb zurückgesteckt werden. Der Steuerschieber verbleibt jedoch in seiner oberen Endlage, das heißt, der "AUS"-Taster bleibt gedrückt und Einschalten ist nicht möglich, weil der Steuerschieber angehoben ist. Diese normale Funktion des internen Verriegelungsschiebers 4 des Niederspannungs-Leistungsschalters 2 wurde als nicht erfindungswesentlich zur besseren Übersichtlichkeit nicht dargestellt.

In den Figuren 1 und 2 ist die Abschließvorrichtung 7 als eine Baueinheit ausgebildet, die unterhalb des Leistungsschalters 2 am zugehörigen Einschubrahmen 1 oder einem anderen ortsfesten Bauteil eines Schaltfeldes befestigt ist, das den Einschubrahmen mit dem Leistungsschalter aufnimmt. Jedoch gibt es Anwendungen, bei denen eine Bedienung der Abschließvorrichtung an einer anderen Stelle vorteilhafter oder zweckmäßiger erscheint. Dies wird gemäß der Figur 3 dadurch ermöglicht, dass eine in Funktionsgruppen getrennte Abschließvorrichtung 12 verwendet wird, wobei die Funktionsgruppen miteinander durch ein gelenkiges oder flexibles Betätigungsorgan (Gestänge, Seilzug, Bowdenzug) verbunden sind.

In der Figur 3 sind als Funktionsgruppen der Abschließvorrichtung 12 eine das zusätzliche Schloss 8 enthaltende Schließeinheit 13 und eine Steuereinheit 14 gezeigt, die je nach Anbringung der Schließeinheit 13 durch ein unterschiedlich verlegtes flexibles Betätigungsorgan 15 miteinander verbunden sind. In bekannter Weise besteht das Betätigungsorgan 15 aus einem Mantel und einer in dem Mantel geführten Seele. Geeignete Positionen für die Schließeinheit 13 sind, wie die Figur 3 zeigt, insbesondere eine linke oder rechte Seitenwand 16 bzw. 17 des Einschubrahmens 1, ein den Einschubrahmen 1 tragendes Bauteil 18 in der Gestalt einer Traverse, einer Zwischenwand oder eines Fachbodens eines den Einschubrahmen 1 aufnehmenden Schaltfeldes 19 oder eine das Schaltfeld 19 verschließende Tür 20. Diese Anordnungen sind nur Beispiele. Der Fachmann kann daher auch andere Positionen wählen, wenn sie ihm zweckmäßiger erscheinen.

Die Steuereinheit 14 ist für alle gezeigten und weiteren möglichen Anordnungen der Schließeinheit 13 gleich. Sie befindet sich an einem ortsfesten Teil, z. B. an dem erwähnten Bauteil 18 des Schaltfeldes 19 oder an dem Einschubrahmen 1, sofern dieser ein Bodenblech o. ä. aufweist. Um die Steuereinheit 14 und das Bauteil 18 in der Figur 3 soweit wie erforderlich sichtbar zu machen, ist der Leistungsschalter 2 unten aufgebrochen dargestellt. Auch ein mit der Steuereinheit 14 zusammenwirkender Teil des hinter dem Bedienpult 3 verschiebbar geführten Verriegelungsschiebers 4 ist in dem aufgebrochenen Bereich sichtbar.

Wie näher den Figuren 4, 5 und 6 zu entnehmen ist, umfasst die Steuereinheit 14 eine Grundplatte 21 mit einem Lagerbock 22 und einem Federbock 23. Öffnungen 24 erlauben eine beliebige Befestigung der Steuereinheit 14 an den erwähnten Teilen eines Schaltfeldes 19. Ein Steuerglied 25 ist als ein Schwenkhebel ausgebildet, der um einen im Lagerbock 22 sitzenden Lagerbolzen 26 beweglich ist. Eine Steuernase 27 des Steuergliedes 25 bildet zugleich eine Arbeitsfläche für das Zusammenwirken mit dem Verriegelungsschieber 4 und dient als Widerlager einer Rückstellfeder 28, deren anderes Ende an dem Federbock 23 eingehängt ist.

Das biegsame Betätigungsorgan 15 besteht, wie schon erwähnt aus einem Mantel 30 und einer darin verschiebbaren Seele in der Art eines Drahtseils 31. An der Steuereinheit 14 ist der Mantel 30 mittels einer Halteklammer 32 befestigt, während am gegenüberliegenden (mit der Schließeinheit 13 in der Figur 3 zusammenwirkenden) Ende ein Fassungskörper 33 vorgesehen ist. Das Drahtseil 31 ist mit dem Steuerglied 25 durch einen gelenkig am Steuerglied angreifenden Gabelkörper 34 gekoppelt, der die mittels des Drahtseils 31 ausgeübte Kraft symmetrisch auf das Steuerglied 25 überträgt.

In der Figur 3 und in der Seitenansicht der Steuereinheit 14 in der Figur 5 ist der nicht aktivierte Normalzustand der Abschließvorrichtung 12 gezeigt, in welcher das Steuerglied 25 unter dem Einfluss der als Zugfeder ausgebildeten Rückstellfeder 28 seine Ruhestellung einnimmt. Der aktivierte Zustand wird durch die Figuren 4 und 6 veranschaulicht, in denen das Steuerglied 25 eine aufrechte Stellung relativ zu der Grundplatte 21 einnimmt. In diese Stellung gelangt das Steuerglied 25 unter dem Einfluss des Gabelkörpers 34 und des Drahtseils 31, das durch die Schließeinheit 13 betätigt wird, wie dies in den Figuren 5 und 6 angedeutet ist

Durch die vorliegende Erfindung wird gewährleistet, dass ein eingesetzter Leistungsschalter nicht versehentlich oder unerlaubt in die Betriebsstellung eingefahren und dort eingeschaltet werden kann. Die bisher eingesetzten Abschließvorrichtungen bieten in dieser Hinsicht keinen Schutz, weil die Abschließvorrichtung Bestandteil des Leistungsschalters ist und nur mit diesem zusammen entnommen werden kann.

### Bezugszeichen

- 1: Einschubrahmen
- 2: Niederspannungs-Leistungsschalter
- 3: Bedienpult
- 4: Verriegelungsschieber
- 5: Schloss (am Leistungsschalter)
- 6: Einschaltbereitschaftssteuerung
- 7: Abschließvorrichtung (Fig. 1 und 2)
- 8: Schloss der Abschließvorrichtung
- 9: Schlüssel
- 10: Steuerglied (Fig. 1, 2)
- 11: Betätigungsfläche
- 12: Abschließvorrichtung (andere Ausführung, Figur 3)
- 13: Schließeinheit
- 14: Steuereinheit
- 15: Flexibles Betätigungsorgan
- 16: Linke Seitenwand des Einschubrahmens 1
- 17: Rechte Seitenwand des Einschubrahmens 1
- 18: Bauteil des Schaltfeldes 19
- 19: Schaltfeld
- 20: Tür des Schaltfeldes 20
- 21: Grundplatte
- 22: Lagerbock
- 23: Federbock
- 24: Durchgangsloch
- 25: Steuerglied (Schwenkhebel, Figuren 4, 5 6)
- 26: Lagerbolzen
- 27: Steuernase des Steuergliedes 25
- 28: Rückstellfeder

- 30: Mantel des Betätigungsorgans 15
- 31: Drahtseil
- 32: Halteklammer
- 33: Fassungskörper
- 34: Gabelkörper

## Patentansprüche

1. Abschließvorrichtung (7; 12) für einen in einen Einschubrahmen (1) einfahrbaren Niederspannungs-Leistungsschalter (2) mit einem in eine Endlage verschiebbaren internen Verriegelungsschieber (4), welcher ein Schloss (5) und eine Einstecköffnung für eine Fahrkurbel mit einer internen Einschaltbereitschaftssteuerung (6) derart verbindet, dass ein Einschalten des Niederspannungs-Leistungsschalters (2) bei in seiner Endlage befindlichem Verriegelungsschieber (4) verhindert ist,
**dadurch gekennzeichnet,**
**dass** die Abschließvorrichtung (7; 12) außerhalb des Leistungsschalters (2) angeordnet ist und ein zusätzliches Schloss (8) sowie ein mit dem internen Verriegelungsschieber (4) zusammenwirkendes Steuerglied (10; 25) aufweist, wobei das Steuerglied (10; 25) beim Abschließen des zusätzlichen Schlosses zum Überführen des internen Verriegelungsschiebers (4) in seine Endlage aus einer einem nicht aktivierten Zustand der Abschließvorrichtung (7; 12) entsprechenden Ruhestellung in eine einem aktivierten Zustand der Abschließvorrichtung (7; 12) entsprechende Stellung überführbar ist.

2. Abschließvorrichtung nach Anspruch 1,
**dadurch gekennzeichnet,**
**dass** bei Anordnung des Verriegelungsschiebers (4) mit vertikaler Verschiebbarkeit das Steuerglied (10; 25) in einem den Leistungsschalter (2) aufnehmenden Schaltfeld (19) unterhalb des Leistungsschalters (2) an einem ortsfesten Bauteil (18) angeordnet ist.

3. Abschließvorrichtung nach Anspruch 2,
**dadurch gekennzeichnet,**
**dass** die Abschließvorrichtung (7) als eine das zusätzliche Schloss (8) und das Steuerglied (10) umfassende Baueinheit in einem den Leistungsschalter aufnehmenden Schaltfeld (19) unterhalb des Leistungsschalters (2) befestigt ist.

4. Abschließvorrichtung nach Anspruch 2,
**dadurch gekennzeichnet,**
**dass** eine das Steuerglied (25) aufweisende Steuereinheit (14) unterhalb des Leistungsschalters (2) im Schaltfeld (19) an einem ortsfesten Bauteil (18) angeordnet ist und dass eine mit der Steuereinheit (14) durch ein flexibles Betätigungsorgan (15) verbundene, das zusätzliche Schloss (8) aufweisende Schließeinheit (13) im Schaltfeld (19) in einem Abstand von der Steuereinheit (14) befestigt ist.

5. Abschließvorrichtung nach Anspruch 4,
**dadurch gekennzeichnet,**
**dass** die Steuereinheit (14) eine Grundplatte (21) mit einem daran um einen Lagerbolzen (26) schwenkbaren Steuerglied (25) sowie eine das Steuerglied (25) im nicht aktivierten Zustand der Abschließvorrichtung (12) in eine Ruhestellung vorspannende Rückstellfeder (28) aufweist.

## Claims

1. Locking apparatus (7; 12) for a low-voltage circuit breaker (2) which can be inserted into a withdrawable part rack (1) and has an internal locking slide (4) which can move linearly to a limit position and connects a locking mechanism (5) and an insertion opening for a drive crank to an internal connection readiness controller (6), in such a way that connection of the low-voltage circuit breaker (2) is prevented when the internal locking slide (4) is in its limit position
**characterized**
**in that** the locking apparatus (7; 12) is arranged outside the circuit breaker (2) and has an additional locking mechanism (8) as well as a control element (10; 25) which interacts with the internal locking slide (4), wherein, during locking of the additional lock the control element (10; 25) can be moved to a position which corresponds to an activated state of the locking apparatus (7; 12), in order to move the internal locking slide (4) to its limit position from a rest position, which corresponds to an unactivated state of the locking apparatus (7; 12).

2. Locking apparatus according to Claim 1,
**characterized**
**in that**, if the locking slide (4) is arranged such that it can move vertically, the control element (10; 25) is arranged on a fixed-position component (18) in a switch panel (19), which holds the circuit breaker (2), underneath the circuit breaker (2).

3. Locking apparatus according to Claim 2,
**characterized**
**in that** the locking apparatus (7) is mounted as a unit, which comprises the additional locking mechanism (8) and the control element (10), in a switch panel (19) which holds the circuit breaker, underneath the circuit breaker (2).

4. Locking apparatus according to Claim 2,
**characterized**
**in that** a control unit (14) which has the control element (25) is arranged on a fixed-position component (18) underneath the circuit breaker (2) in the switch panel (19), and in that a locking unit (13), which is connected to the control unit (14) by means of a flexible operating element (15) and has the additional locking mechanism (8), is mounted in the switch panel (19), at a distance from the control unit (14).

5. Locking apparatus according to Claim 4,
**characterized**
**in that** the control unit (14) has a base plate (21) with a control element (25) which can pivot about a bearing bolt (26) on it, and has a resetting spring (28) which prestresses the control element (25) into a rest position when the locking apparatus (12) is in the unactivated state.

## Revendications

1. Dispositif ( 7 ; 12 ) de fermeture d'un disjoncteur ( 2 ) de basse tension pouvant être inséré dans un cadre ( 1 ) à glissière, comprenant un coulisseau ( 4 ) intérieur de verrouillage pouvant coulisser jusqu'à une position d'extrémité et reliant un verrou ( 5 ) et une ouverture d'enfichage d'une manivelle de manoeuvre à une commande ( 6 ) intérieure de préparation à l'enfichage, de manière à ce qu'une mise sous tension de disjoncteur ( 2 ) de basse tension soit empêchée lorsque le coulisseau ( 4 ) de verrouillage se trouve dans sa position d'extrémité,
**caractérisé**
**en ce que** le dispositif ( 7 ; 12 ) de fermeture est disposé à l'extérieur du disjoncteur ( 2 ) et comporte un verrou ( 8 ) supplémentaire ainsi qu'un élément ( 10 ; 25 ) de commande coopérant avec le coulisseau ( 4 ) intérieur de verrouillage, l'élément ( 10 ; 25 ) de commande pouvant, pour faire passer le coulisseau ( 4 ) intérieur de verrouillage dans sa position d'extrémité, passer d'une position de repos correspondant à un état inactivé du dispositif ( 7 ; 12 ) de fermeture à une position correspondant à un état activé du dispositif ( 7 ; 12 ) de fermeture.

2. Dispositif de fermeture suivant la revendication 1,
**caractérisé**
**en ce que**, lorsque le coulisseau ( 4 ) de verrouillage est disposé en ayant la possibilité de coulisser verticalement, l'élément ( 10 ; 25 ) de commande est disposé sur un composant ( 18 ) fixe en dessous du disjoncteur ( 2 ) dans un tableau ( 19 ) de commande recevant le disjoncteur ( 2 ).

3. Dispositif de fermeture suivant la revendication 2,
**caractérisé**
**en ce que** le dispositif ( 7 ) de fermeture est fixé, en dessous du disjoncteur ( 2 ), sous la forme d'une unité de construction comprenant le verrou ( 8 ) supplémentaire et l'élément ( 10 ) de commande dans un tableau ( 19 ) de commande recevant le disjoncteur.

4. Dispositif de fermeture suivant la revendication 2,
**caractérisé**
**en ce qu'**une unité ( 14 ) de commande comportant l'élément ( 25 ) de commande est disposée sur un composant ( 18 ) fixe dans le tableau ( 19 ) de commande en dessous du disjoncteur ( 2 ) et en ce qu'une unité ( 13 ) de fermeture, comportant le verrou ( 18 ) supplémentaire reliée à l'unité ( 14 ) de commande par un organe ( 15 ) d'actionnement souple, est fixée dans le tableau ( 19 ) de commande à distance de l'unité ( 14 ) de commande.

5. Dispositif de fermeture suivant la revendication 4,
**caractérisé**
**en ce que** l'unité ( 14 ) de commande comporte une plaque ( 21 ) de base ayant un élément ( 25 ) de commande pouvant y pivoter autour d'un axe ( 26 ) formant palier, ainsi qu'un ressort ( 28 ) de rappel mettant, dans une position de repos, l'élément ( 25 ) de commande sous précontrainte dans l'état inactivé du dispositif ( 12 ) de fermeture.
